## Europäisches Patentamt
## European Patent Office
## Office européen des brevets

(11) Veröffentlichungsnummer: **0 010 277**
**A1**

(12) **EUROPÄISCHE PATENTANMELDUNG**

(21) Anmeldenummer: **79103951.4**

(22) Anmeldetag: **15.10.79**

(51) Int. Cl.³: **H 02 G 3/04**
**A 47 B 17/00**

(30) Priorität: **23.10.78 DE 7831543 U**

(43) Veröffentlichungstag der Anmeldung:
**30.04.80 Patentblatt 80/9**

(84) Benannte Vertragsstaaten:
**AT BE CH FR GB IT LU NL SE**

(71) Anmelder: VARIO-Werke Dichmann AG
Hauptstrasse 15
D-6233 Kelkheim(DE)

(72) Erfinder: Bitterberg, Karl-Georg, Prof.
Wannenstrasse 35
D-7000 Stuttgart 1(DE)

(72) Erfinder: Krätschmer, Siegfried
Erich-Ollenhauer-Strasse 50
D-6200 Wiesbaden(DE)

(74) Vertreter: Keil, Rainer, Dipl.-Phys.
Patentanwälte MERTENS & KEIL Ammelburgstrasse 34
D-6000 Frankfurt am Main(DE)

(54) Seitengestell für Büromöbel.

(57) Die Erfindung bezieht sich auf eine Verbesserung an Seitengestellen für Büromöbel, in welchen elektrische Kabel oder sonstige Leitungen zu verlegen sind. Zur Lösung wird mit der Erfindung eine besondere Ausgestaltung eines Kabelkanals (2) sowie dessen Einbauten und Abdeckelemente (19) vorgeschlagen.

EP 0 010 277 A1

.

./...

FIG. 2

FIG. 3

VARIO-Werke

Dichmann AG

6233 Kelkheim/Ts.

"Seitengestell für Büromöbel""

Die Erfindung betrifft ein Seitengestell nach dem Gattungsbegriff des Anspruchs 1.

Wegen der vielfältigen Verwendung elektrischer Geräte, wie Schreibmaschinen, Rechenmaschinen, Nachrichtenübermittlungseinheiten, Anschlußeinheiten für Datenverarbeitungsanlagen und dergleichen, in Büroräumen muß dort häufig eine Vielzahl von Anschlußkabeln verlegt werden. Die Anschlußkabel sind dabei üblicherweise von Wand- oder Bodensteckdosen zu den jeweiligen Arbeitsplätzen geführt. Damit die Vielzahl der Kabel nicht frei herumliegt oder -hängt, ist es üblich, die Kabel in vertikalen Kabelkanälen z.B. in dem Seitengestell der Schreibtische auf die Höhe des unmittelbaren Arbeitsbereiches zu führen. Die Unterbringung soll trotz unterschiedlicher Kabelquerschnitte bequem und raumsparend sein. Der Kabelkanal soll dabei insbesondere aus ästhetischen Gründen nach außen abgeschlossen bzw. verdeckbar sein. Da aber die Kabelverlegung häufiger geändert oder auch neue Kabel verlegt werden müssen, soll der Kabelkanal für diese Handhabungen einfach zugänglich sein. Üblicherweise wird insbesondere bei der Anwendung von Datenverarbeitungsanlagen die Verlegung von drei Kabeln unterschiedlichen Querschnitts nebeneinander verlangt. Diese müssen aber in dem Kabelkanal geordnet und einfach verlegbar sein.

Die Erfindung soll den zuvor geschilderten Bedürfnissen mit geringem konstruktiven Aufwand Rechnung tragen. Dabei soll das Seitengestell rechts wie links verwendbar, d.h. von beiden Seiten für die Kabelverlegung gleichermaßen zugänglich sein.

Diese Aufgabe wird mit dem Merkmal des kennzeichnenden Teils des Anspruchs 1 gelöst. Die Unterteilung des vertikalen Kabelkanals in zwei im horizontalen Querschnitt etwa keilförmige Kanalabschnitte gewährleistet eine einfache Verlegbarkeit der drei Kabel unterschiedlicher Querschnitte sowohl von der rechten als auch von der linken Seite des Seitengestells her bei optimaler Ausnutzung des Kabelkanalquerschnittes.

Der im Hauptanspruch niedergelegte Erfindungsgedanke läßt sich konstruktiv auf einfache Weise mit der Maßnahme des Anspruchs 2 verwirklichen, wobei die Stabilität der den Kabelkanal begrenzenden Elemente, wie Streben oder dergl. erhöht wird.

Mit Hilfe des nach Anspruch 3 vorgesehenen Unterteilungsprofiles wird die Verlegung der vorzugsweise drei Kabel unterschiedlichen Querschnittes in den einzelnen vertikalen Kabelkammern noch erleichtert.

Nach der Maßnahme des Anspruchs 4 bilden Z-Profil und Unterteilungsprofil eine feste Einheit.

Bei einer besonderen Ausgestaltung der Erfindung gemäß Anspruch 5 werden die vertikalen Rippen des Unterteilungsprofiles außer für ihre Funktion zur Unterteilung der Kanalabschnitte in vertikale Kabelkammern zur Aufklemmung und Festlegung von Abdeckplatten ausgenutzt. Für das Abnehmen und Aufklemmen der Abdeckplatten sind somit keine Werkzeuge erforderlich.

Am unteren Ende des vertikalen Kabelkanals sind die Kabel in den Kabelkanal einzuführen. Um dies auf einfache Weise ohne Abnehmen der gesamten Abdeckplatte bewerkstelligen zu können, ist die Maßnahme des Anspruchs 6 getroffen. Die ausschwenkbare Klappe läßt sich einfach von Hand öffnen.

Am oberen Ende des vertikalen Kabelkanals treten entweder die Kabel aus oder sie werden in einem sich anschließenden horizontalen Kabelkanal zu den benachbarten Arbeitsplätzen geführt. Bei der Verlegung der Kabel ist es jedenfalls notwendig, den Kabelkanal am oberen Ende so weit zu öffnen, so daß die erforderlichen Handhabungen für das Durchziehen der Kabel vorgenommen werden können. Diesem Zweck dient die Maßnahme des Anspruchs 7.

Eine konstruktiv einfache Lösung für das leichte Abnehmen und Aufstecken der Kappe ist nach Anspruch 8 vorgesehen.

Die Maßnahme des Anspruchs 9 sorgt für einen zuverlässigen Sitz bei Lösbarkeit der Kappe von Hand.

Die freiliegende Außenseite von Seitengestellen soll auch im Bereich des vertikalen Kabelkanals möglichst vollständig verschlossen bzw. abgedeckt sein, während bei einander grenzenden Seitengestellen benachbarter Schreibtische und horizontal durchgehender Kabelführung ein seitlicher Austritt für die Kabel am oberen Ende des vertikalen Kabelkanals freigehalten bleiben muß. Um diese Alternativen einfach verwirklichen zu können, ist die Maßnahme des Anspruchs 10 getroffen.

Bei dem Merkmal des Anspruchs 11 werden die ohnehin vorhandenen Nocken der oberen Abschlußkappe gleichzeitig zur lösbaren Festlegung des oberen Abdeckelementes benutzt.

Weitere Merkmale, Vorteile und Anwendungsmöglichkeiten der vorliegenden Erfindung ergeben sich aus der nachfolgenden Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination auch unabhängig von ihrer Zusammenfassung in den Ansprüchen oder deren Rückbeziehung den Gegenstand der vorliegenden Erfindung.

Es zeigen:

Fig. 1  in Schrägansicht ein nach der Erfindung ausgestattetes Seitengestell an einem Schreibtisch,

Fig. 2  eine Schrägansicht gemäß Fig. 1 in Explosionsdarstellung,

Fig. 3  einen horizontalen Schnitt durch das erfindungsgemäße Seitengestell im Bereich des vertikalen Kabelkanals,

Fig. 4  die obere Verschlußkappe des vertikalen Kabelkanals im Schnitt bzw. in Ansicht (Fig. 4a) und Seitenansicht (Fig. 4b),

Fig. 5  im Vertikalschnitt das obere Abdeckelement, und

Fig. 6  die am unteren Ende des vertikalen Kabelkanals ausschwenkbare Klappe in einer teilweise weggebrochenen Ansicht (Fig. 6a) und Seitenansicht (Fig. 6b).

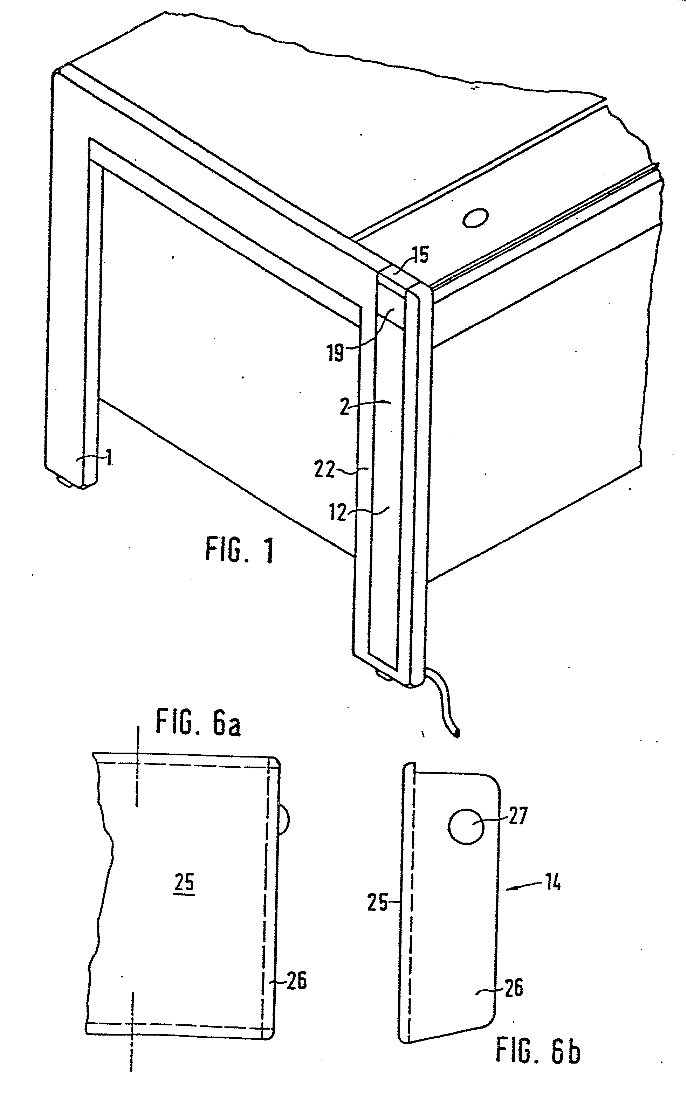

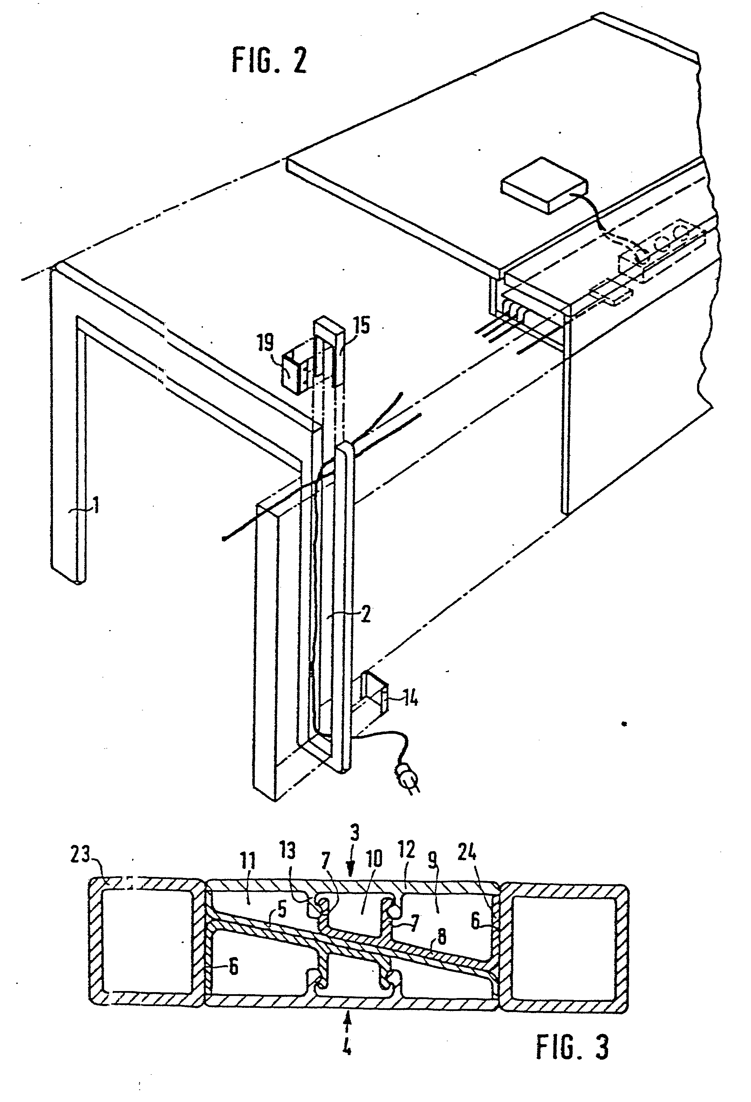

Nach Fig. 1 und 2 ist das Seitengestell 1 eines Schreibtisches als n-Gestell ausgebildet, in dessen einer vertikalen Strebe 22 ein vertikaler Kabelkanal 2 gebildet ist. Der Kabelkanal 2 ist durch zwei im Abstand angeordnete am unteren Ende miteinander verbundene Vierkantrohre 23, und zwar zwischen dessen einander zugewandten Seitenwandflächen 6 begrenzt. Der vertikale Kabelkanal 2 wird durch ein im wesentlichen über die gesamte Höhe des Kabelkanals 2 sich erstreckendes Z-Profil 5 diagonal in zwei etwa keilförmige vertikale Kabelkanalabschnitte 3 und 4 unterteilt, die sich zu dem Gesamtquerschnitt des Kabelkanals 2 ergänzen. Das Z-Profil 5 ist mit den freien Schenkeln an den Seitenwandflächen 6 befestigt, z.B. mit diesen verschweißt, wenn sowohl die Vierkantrohre 23 als auch das Z-Profil 5 aus Metall bestehen. Auf jeder Seite des Z-Profils 5 unterteilt ein beispielsweise aus Kunststoff bestehendes Unterteilungsprofil 8 mit auswärts weisenden Rippen 7 die Kanalabschnitte 3 und 4 je in vertikal nebeneinander verlaufende Kabelkammern 9, 10 und 11. In der jeweiligen Kabelkammer 9 kann das Kabel mit dem größten Querschnitt, in der Kabelkammer 10 mit dem mittleren Querschnitt und in der Kabelkammer 11 mit dem geringsten Querschnitt nebeneinander untergebracht werden. Die Rippen 7 sind an ihren äußeren Längsrändern mit Rastnuten versehen, in welche nach innen weisende federnde Klemmnasen 13 von seitlichen Abdeckplatten 12, die z.B. ebenfalls aus Kunststoff bestehen, angebracht sind. Beim Aufstecken der Abdeckplatten 12 und Zusammenwirken der Rippen 7 und Klemmnasen 13 liegt die jeweilige Abdeckplatte 12 mit ihren äußeren vertikalen Längsrändern einerseits an dem einen Schenkel des Z-Profils 5, andererseits an dem äußeren Rand einer Außenrippe 24 des Unterteilungsprofiles 8 an; damit die Außenfläche der Abdeckplatte 12 bündig mit den angrenzenden Vierkantrohren 23 liegt, sind der genannte Schenkel und die Rippe 24 entsprechend der Dicke der Abdeckplatte 12 zurückgesetzt.

Für den Austritt bzw. den Eintritt der Kabel in den vertikalen Kabelkanal 2 ist am unteren Ende wenigstens einer Abdeckplatte 12, die entsprechend geringere vertikale Länge hat, eine ausschwenkbare Klappe 14 gemäß Fig. 6a und 6b vorgesehen. Die Klappe 14 besteht im wesentlichen aus einem Plattenteil 25, von welchem an ihrem unteren Rande nach innen abgeschrägte Seitenschenkel 26 wegragen. An die Seitenschenkel 26 sind jeweils seitlich auswärts weisende Erhebungen oder Nocken 27 angeformt, mit Hilfe derer die Klappe 14 schwenkbar in entsprechenden Vertiefungen bzw.

Aussparungen der Seitenwandflächen 6 der Vierkantrohre 23 gehalten ist. Die Klappe 14 kann demnach einstückig aus Kunststoff gefertigt sein.

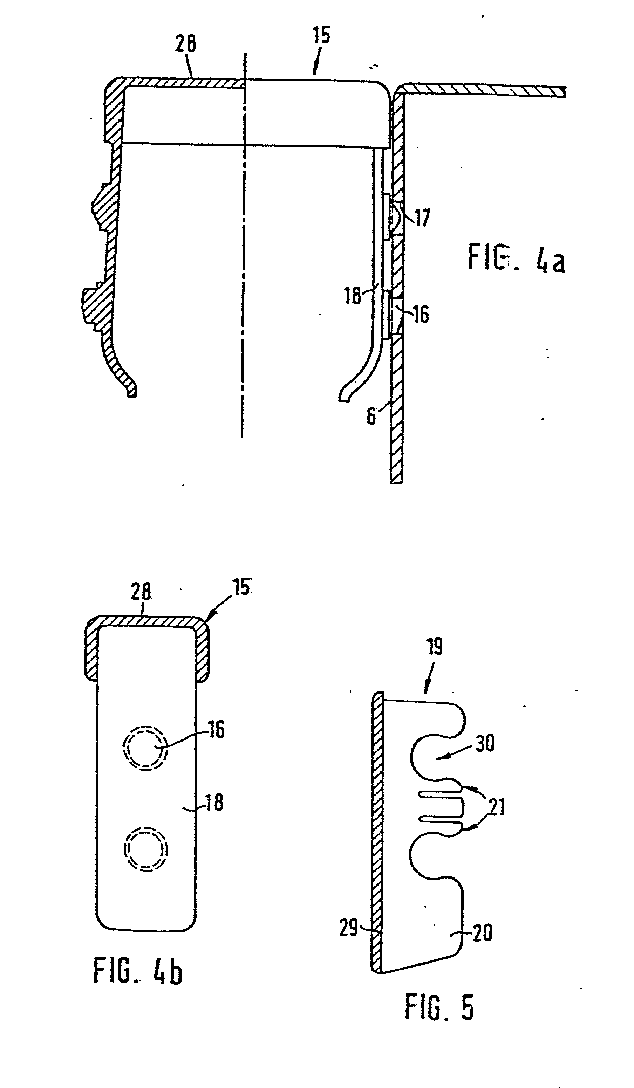

Die Abdeckplatten 12 reichen, wie aus Fig. 1 ersichtlich, nicht bis zum oberen Rand des oben offenen Kabelkanals 2. Vielmehr ist von oben in den Kabelkanal 2 eine Abschlußkappe 15 einsteckbar, die in den Fig. 4a und 4b näher veranschlauchlicht ist. Die Kappe 15 hat einen Kopfabschnitt 28, von welchem nach unten elastisch federnde Laschen 18 wegragen. Die Laschen 18 liegen im eingebauten Zustand den Seitenwandflächen 6, die den Kabelkanal 2 begrenzen, benachbart. Beim Einfügen rasten die Laschen 18 mit Nocken 16 in entsprechende Löcher oder Aussparungen 17 in den Seitenwandflächen 6. Gemäß der Darstellung sind an jeder Lasche 18 zwei Nocken 16 übereinander angeordnet, von welchen die obere sich kegelförmig verjüngt und die untere lediglich am unteren Rand abgeschrägt ist. Hierdurch wird erreicht, daß die Abschlußkappe 15 zwar einfach unter geringem Druck von oben in den Kabelkanal eingesetzt werden kann. Ein Herausziehen ist aber nur möglich, wenn die beiden Laschen 18 am unteren Rand von Hand nach innen gedrückt werden. Zur Erleichterung des Eingriffs sind deswegen die Laschen 18 am unteren Ende zur Mittelebene der Kappe 15 hin einwärts gebogen. Auch die Abschlußkappe 15 kann einstückig aus Kunststoff gefertigt sein.

Der nach dem Aufsetzen der Abschlußkappe 15 noch über den Abdeckplatten freiliegende Teil des vertikalen Kabelkanals 2 kann, wo keine Kabel herausgeführt werden müssen, durch ein gesondertes Abdeckelement 19 verschlossen werden. Das Abdeckelement 19 besteht aus einer Grundplatte 29, von welchem aus seitliche Wangen 20 ins Kanalinnere weisen. In den Wangen 20 sind von Klemmlippen 21 wenigstens einseitig begrenzte Einbuchtungen 30 freigehalten, mit Hilfe derer das jeweilige Abdeckelement 19 auf die Nocken 16 der Abschlußkappe 15 aufgesteckt werden kann. Diese Abdeckelemente 19 können also je für sich ab- und angebaut werden, ohne daß dafür besondere Werkzeuge erforderlich wären.

Bezugszeichenliste:

1   Seitengestell
2   Kabelkanal
3   Kanalabschnitt
4   Kanalabschnitt
5   Profil
6   Seitenwandfläche
7   Rippen
8   Unterteilungsprofil
9   Kanalkammer
10  Kanalkammer
11  Kanalkammer
12  Abdeckplatte
13  Klemmnase
14  Klappe
15  Kappe
16  Nocken
17  Aussparung
18  Laschen
19  Abdeckelement
20  Wangen
21  Klemmlippen
22  Strebe
23  Vierkantrohre
24  Außenrippe
25  Plattenteil
26  Seitenschenkel
27  Erhebungen
28  Kopfabschnitt
29  Grundplatte
30  Aussparungen

0010277

MERTENS & K⊏

PATENTANW⊏⊏⊏

6000 Frankfurt am ⊏⊏⊏

D 5 P 15 EP
11. Oktober 1979

VARIO-Werke

Dichmann AG
Hauptstraße 15
6233 Kelkheim/Ts.

"Seitengestell für Büromöbel""

Schutzansprüche:

1.   Seitengestell für Büromöbel, z.B. Büroschreibtische oder dergleichen, mit einem im wesentlichen vertikalen Kabelkanal, dadurch gekennzeichnet, daß in dem Kabelkanal (2) ein diesen in Kanalabschnitte (3, 4) diagonal unterteilendes Profil (5) vorgesehen ist.

2.   Seitengestell nach Anspruch 1, dadurch gekennzeichnet, daß das Profil (5) als an den den Kabelkanal (2) begrenzenden Seitenwandflächen (6) befestigtes Z-Profil ausgebildet ist.

3.   Seitengestell nach Anspruch 1 oder 2, dadurch gekennzeichnet, daß in dem einen und/oder anderen Kanalabschnitt (3, 4) ein mit vertikalen Rippen (7) versehenes Unterteilungsprofil (8) vorgesehen ist, wobei die Rippen (7) die Kanalabschnitte (3, 4) je in vertikale Kabelkammern (9, 10, 11) unterteilen.

4. Seitengestell nach Anspruch 3, dadurch gekennzeichnet, daß das (die) Unterteilungsprofil(e) (8) an dem Profil (5) befestigt, z.B. mit diesem verklebt oder vernietet ist (sind).

5. Seitengestell nach Anspruch 3 oder 4, dadurch gekennzeichnet, daß der Kabelkanal (2) gegebenenfalls beidseitig mit Abdeckplatten (12) versehen ist, welche mit Klemmnasen (13) über die vertikalen Rippen (7) des Unterteilungsprofiles (8) greifen.

6. Seitengestell nach Anspruch 5, dadurch gekennzeichnet, daß wenigstens an dem unteren Ende einer Abdeckplatte (12) eine ausschwenkbare Klappe (14) vorgesehen ist.

7. Seitengestell nach einem der Ansprüche 1 bis 6, dadurch gekennzeichnet, daß der Kabelkanal (2) oben mit einer aufsteckbaren Kappe (15) verschließbar ist.

8. Seitengestell nach Anspruch 7, dadurch gekennzeichnet, daß die Kappe (15) mit Nocken (16) in Aussparungen (17) der den Kabelkanal (2) begrenzenden Seitenwandflächen (6) eingreift.

9. Seitengestell nach Anspruch 8, dadurch gekennzeichnet, daß die Nocken (16) an nach unten weisenden federnden Laschen (18) vorgesehen sind.

10. Seitengestell nach einem der Ansprüche 5 bis 9, dadurch gekennzeichnet, daß sich an das obere Ende wenigstens einer Abdeckplatte (12) ein aufsteckbares Abdeckelement (19) anschließt.

11. Seitengestell nach Anspruch 10, dadurch gekennzeichnet, daß das Abdeckelement (19) mit an seitlichen Wangen (20) vorgesehenen Klemmlippen (21) über die Nocken (16) der Laschen (18) der Kappe (15) greift.

0010277

FIG. 1

FIG. 6a

FIG. 6b

0010277

**FIG. 2**

**FIG. 3**

0010277

FIG. 4a

FIG. 4b

FIG. 5

Europäisches Patentamt

**EUROPÄISCHER RECHERCHENBERICHT**

0010277

Nummer der Anmeldung

EP 79 10 3951

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 1 786 823 (CARRINGTON)<br>* Figuren 1,2,5 *<br><br>--<br><br>FR - A - 1 561 565 (BRAGATO)<br>* Secte 1, Spalte 2, Zeilen 2-17;<br>Figur 2 *<br><br>---- | 1<br><br><br>1,3,5-10 |

**KLASSIFIKATION DER ANMELDUNG (Int.Cl. 3)**

H 02 G 3/04
A 47 B 17/00

**RECHERCHIERTE SACHGEBIETE (Int. Cl. 3)**

A 47 B
H 02 G

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-01-1980 | SCHMITTER |

EPA form 1503.1 06.78